# EUROPEAN PATENT APPLICATION

(11) **EP 4 350 816 A1**
(43) Date of publication of application: **10.04.2024**
(21) Application number: 22874374.6
(22) Date of filing: 14.07.2022
(51) Int. Cl.: H01M 4/78

(54) **BATTERY CELL, BATTERY, AND POWER CONSUMING DEVICE**

(30) Priority: 30.09.2021 CN 202122403542 U
(71) Applicant: Contemporary Amperex Technology Co., Limited, Ningde, Fujian 352100 (CN)
(72) Inventor: FAN, Yulei, Ningde, Fujian 352100 (CN); WANG, Yiheng, Ningde, Fujian 352100 (CN); GE, Xiaoming, Ningde, Fujian 352100 (CN); WANG, Manman, Ningde, Fujian 352100 (CN); CHEN, Yujie, Ningde, Fujian 352100 (CN); ZHANG, Xiaoping, Ningde, Fujian 352100 (CN)
(74) Representative: Gong, Jinping
(86) International application number: PCT/CN2022/105807
(87) International publication number: WO 2023/050977

(57) **Abstract**

Disclosed are a battery unit, a battery and a power consuming device. The battery unit comprises: an electrode assembly comprising a positive electrode plate and a negative electrode plate that have opposite polarities, and a separator for separating the positive electrode plate and the negative electrode plate; and a support component, the electrode assembly being wound around an outer periphery of the support component; wherein an outer peripheral wall surface of the support component comprises a first circular arc surface and a second circular arc surface, one end of the first circular arc surface is connected to one end of the second circular arc surface, and the other end of the first circular arc surface is spaced apart from the other end of the second circular arc surface so as to form a step region on the outer peripheral wall surface, the step region being used for accommodating at least part of the electrode assembly. The battery unit of the embodiment of the present application allows, by forming the step region on the outer peripheral wall surface of the support component, a step to be accommodated in the step region during the winding of the electrode assembly, thereby preventing compression, and thus prolonging the service life of the battery and enhancing the safety of the battery.

## Description

### Cross-Reference to Related Application

The present application claims the priority of Chinese patent application no. 202122403542.1, entitled "BATTERY UNIT, BATTERY, AND POWER CONSUMING DEVICE" and filed on September 30, 2021, the entire content of which is incorporated herein by reference.

### Technical Field

The present application relates to the technical field of batteries, and more particularly to a battery unit, a battery, and a power consuming device.

### Background Art

Achieving energy conservation and emission reduction is the key to the sustainable development of the automotive industry. Electric vehicles have become an important part of the sustainable development of the automotive industry due to their advantages in energy conservation and environmental protection. For the electric vehicles, the battery technology is an important factor to their development.

In the development of the battery technology, the service life and safety are also non-negligible issues, in addition to improving the performance of batteries. If the service life of the batteries does not reach the expected time, the maintenance and use costs of the batteries will be considerable. If the safety of the batteries cannot be guaranteed, the batteries cannot be used. Therefore, how to prolong the service life of the batteries and enhance the safety of the batteries is an urgent technical problem to be solved in the battery technology.

### Summary of the Invention

In view of the above problems, the present application provides a battery unit, a battery and a power consuming device, in order to prolong the service life of the battery and enhance the safety of the battery.

In a first aspect, the present application provides a battery unit, comprising: an electrode assembly comprising a positive electrode plate and a negative electrode plate that have opposite polarities, and a separator for separating the positive electrode plate and the negative electrode plate; and a support component, the electrode assembly being wound around an outer periphery of the support component; wherein an outer peripheral wall surface of the support component comprises a first circular arc surface and a second circular arc surface, one end of the first circular arc surface is connected to one end of the second circular arc surface, and the other end of the first circular arc surface is spaced apart from the other end of the second circular arc surface so as to form a step region on the outer peripheral wall surface, the step region being used for accommodating at least part of the electrode assembly.

In the embodiment, the step region formed on the outer peripheral wall surface of the support component can accommodate part of the electrode assembly, and can effectively reduce compression of the support component against a winding starting end of the electrode assembly, thereby reducing the risk of stress concentration between the support component and the electrode assembly. In this way, it is possible to effectively reduce, when the battery unit expands during use, the occurrence of the problem of falling off of an active material on the electrode plates due to the compression, thereby reducing deterioration of the performance of the battery unit, effectively prolonging the service life of the battery unit, and improving the safety of the battery unit.

In some embodiments, the other end of the first circular arc surface is spaced apart from the other end of the second circular arc surface in a radial direction of the support component to form the step region.

In the embodiment, a connecting surface for the other end of the first circular arc surface and the other end of the second circular arc surface is a radial surface, and such an arrangement facilitates the machining of the step region.

In some embodiments, a central angle corresponding to the second circular arc surface is in a range of 10° to 180°.

In the embodiment, setting the central angle corresponding to the second circular arc surface in the range of 10° to 180° can be more suitable for the winding of the electrode assembly, and meanwhile, it can be more conducive to accommodating the winding starting end in the step region.

In some embodiments, the first circular arc surface is configured as an equal-diameter circular arc surface, the second circular arc surface is configured as a variable-diameter circular arc surface, the first circular arc surface includes a first end portion and a second end portion, the second circular arc surface includes a third end portion and a fourth end portion, the first end portion and the third end portion are connected, and the second end portion and the fourth end portion are spaced apart; wherein the first end portion and the third end portion have an equal diameter, and the diameter of the fourth end portion is smaller than the diameter of the second end portion.

In the embodiment, by configuring the second circular arc surface as the variable-diameter circular arc surface, a variable-diameter parameter of the variable-diameter circular arc surface can be flexibly set in combination with the specific structural condition of the electrode assembly, so that the step region can be adapted to the winding of the electrode assembly under different conditions, and a structural design of the step region can be flexible and diverse.

In some embodiments, the second circular arc surface is configured as an elliptical surface.

In the embodiment, by configuring the second circular arc surface as the elliptical surface, the second circular arc surface can have a larger central angle, and thus it is possible to have a larger range of the step region. In this way, more electrode assemblies can be accommodated by means of the larger range of the step region to further reduce the risk that the support component and the electrode assembly generate stress concentration.

In some embodiments, the first circular arc surface and the second circular arc surface are configured as equal-diameter circular arc surfaces, and the diameter of the first circular arc surface is greater than the diameter of the second circular arc surface.

In the embodiment, an outer surface of the support component is composed of two equal-diameter circular arc surfaces, so that the step region can be formed in a variety of ways, and the structural design can be flexible and diverse.

In some embodiments, two separators, the positive electrode plate and the negative electrode plate have a thickness E, and the step region has a depth H, wherein 0.8 ≤ H/E ≤ 1.2.

In the embodiment, by setting the depth of the step region to be 0.8 to 1.2 times of the thickness of the two separators, the positive electrode plate and the negative electrode plate, it is possible to better accommodate the winding starting end of the electrode assembly, reducing the risk that the support component and the electrode assembly generate stress concentration.

In some embodiments, the separator, the positive electrode plate, the separator and the negative electrode plate are sequentially stacked and wound to form the electrode assembly, and winding starting ends of the two separators, a winding starting end of the positive electrode plate and a winding starting end of the negative electrode plate are located in the step region.

In the embodiment, by accommodating the winding starting ends in the step region, it is possible not only to effectively reduce the risk that the support component and part of the winding starting ends generate stress concentration, but also to narrow the range of the step region, that is, the central angle of the second circular arc surface can be decreased, thereby improving the overall structural strength of the support component.

In a second aspect, the present application provides a battery, comprising a battery unit of any one of the embodiments described above.

In a third aspect, the present application provides a power consuming device, comprising a battery unit of any one of the embodiments described above.

The aforementioned description is only an overview of the technical solutions of the present application. In order to more clearly understand the technical means of the present application to implement same according to the contents of the specification, and in order to make the aforementioned and other objects, features and advantages of the present application more obvious and understandable, specific embodiments of the present application are exemplarily described below.

### Brief Description of the Drawings

Various other advantages and benefits will become apparent to those of ordinary skill in the art upon reading the following detailed description of preferred embodiments. The drawings are merely for the purpose of illustrating the preferred embodiments and are not to be construed as limiting the present application. Moreover, like components are denoted by like reference numerals throughout the drawings. In the drawings:
Fig. 1 is a schematic structural diagram of a vehicle according to some embodiments of the present application;
Fig. 2 is a schematic exploded structural diagram of a battery according to some embodiments of the present application;
Fig. 3 is a schematic exploded structural diagram of a battery unit according to some embodiments of the present application;
Fig. 4 is a schematic structural diagram of an electrode assembly according to some embodiments of the present application;
Fig. 5 is a schematic cross-sectional structural diagram of an electrode assembly according to some embodiments of the present application;
Fig. 6 is an enlarged schematic structural diagram of part A of the electrode assembly shown in Fig. 5;
Fig. 7 is a schematic cross-sectional structural diagram of an electrode assembly according to other embodiments of the present application;
Fig. 8 is an enlarged schematic structural diagram of part B of the electrode assembly shown in Fig. 7;
Fig. 9 is a schematic cross-sectional structural diagram of a support component according to some embodiments of the present application;
Fig. 10 is a schematic exploded cross-sectional diagram of the support component shown in Fig. 9;
Fig. 11 is a schematic cross-sectional structural diagram of a support component according to other embodiments of the present application;

In the accompanying drawings, the figures are not drawn to scale.

### Detailed Description of Embodiments

The implementations of the present application will be further described in detail below in conjunction with the accompanying drawings and embodiments. The following detailed description of the embodiments and the accompanying drawings are used to illustrate the principle of the present application by way of example but should not be used to limit the scope of the present application. That is, the present application is not limited to the described embodiments.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprising" and "including" and any variations thereof in the description and the claims of the present application as well as the brief description of the accompanying drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the technical features modified thereby. In the description of the embodiments of the present application, the phrase "a plurality of' means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist, for example, A and/or B can include: the three instances of A alone, A and B simultaneously, and B alone. In addition, the character "j" herein generally indicates an "or" relationship between the associated objects.

In the description of the embodiments of the present application, the term "a plurality of' means two or more (including two), similarly the term "a plurality of groups" means two or more groups (including two groups), and the term "a plurality of pieces" means two or more pieces (including two pieces).

In the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the drawings and are merely intended to facilitate and simplify the description of the embodiments of the present application, rather than indicating or implying that the device or element considered must have a particular orientation or be constructed and operated in a particular orientation, and therefore not to be construed as limiting the embodiments of the present application.

In the description of the embodiments of the present application, unless otherwise explicitly specified and defined, the technical terms "mounting", "mutual connection", "connection", "fixing", etc. should be understood in a broad sense, for example, they may be a fixed connection, a detachable connection, or an integrated connection; may be a mechanical connection or an electrical connection; and may be a direct connection or an indirect connection through an intermediate medium, and may be communication between interiors of two elements or interaction between the two elements. For those of ordinary skill in the art, the specific meaning of the above terms in the embodiments of the present application can be understood according to specific situations.

At present, from the perspective of the development of the market situation, the traction batteries are used more and more widely. The traction batteries are not only used in energy storage power systems such as hydroelectric power plants, thermal power plants, wind power plants and solar power plants, but also widely used in electric transportation means such as electric bicycles, electric motorcycles and electric vehicles and in many fields such as military equipment and aerospace. With the continuous expansion of the application field of traction batteries, the market demand for the traction batteries is also expanding.

The applicant has noted that a support component is generally a cylindrical body having the same diameter at each part, an electrode assembly is wound around an outer periphery of the support component, and a winding starting end of the electrode assembly and an outer peripheral wall surface of the support component form a step; however, a battery unit (also called a cell) generally expands during use, and the support component compresses the winding starting end of the electrode assembly. The compression may cause an active material on an electrode plate to fall off, thereby deteriorating the performance of the battery unit, and in severe cases, a separator may be punctured, causing short circuiting of the battery, and thus resulting in a safety problem. As the mileage of an automobile and the energy density of the battery increase, the demand for an electrode plate with a large coating weight is growing, that is to say, the electrode plate with a large coating weight increases the height of the step, and the compression of the support component against an electrode assembly is increasingly serious.

On the basis of the above consideration, in order to solve the problem that the performance of a battery unit deteriorates due to the expansibility of the battery unit during the use of the battery unit, after intensive research, a battery unit is designed, and the step at the time of winding the electrode assembly can be accommodated in a step region by forming a step region on an outer peripheral wall surface of the support component (equivalent to a center pin in the prior art) of the battery unit, thereby avoiding the compression.

The battery unit disclosed in the embodiments of the present application may be used in, but not limited to, a power consuming device, such as a vehicle, a ship, or an aircraft. A power supply system provided with the power consuming device composed of a battery unit, a battery and the like disclosed in the present application may be used.

The embodiments of the present application provide a power consuming device using a battery as a power supply. The power consuming device may be, but is not limited to, a mobile phone, a tablet, a laptop, an electric toy, an electric tool, a battery cart, an electric vehicle, a ship, a spacecraft, etc. The electric toy may include a stationary or mobile electric toy, for example, a game console, an electric vehicle toy, an electric ship toy, an electric airplane toy, etc. The spacecraft may include an airplane, a rocket, a space shuttle, a spaceship, etc.

For ease of description of the following embodiments, an embodiment of the present application in which the power consuming device is a vehicle 1000 is taken as an example for description.

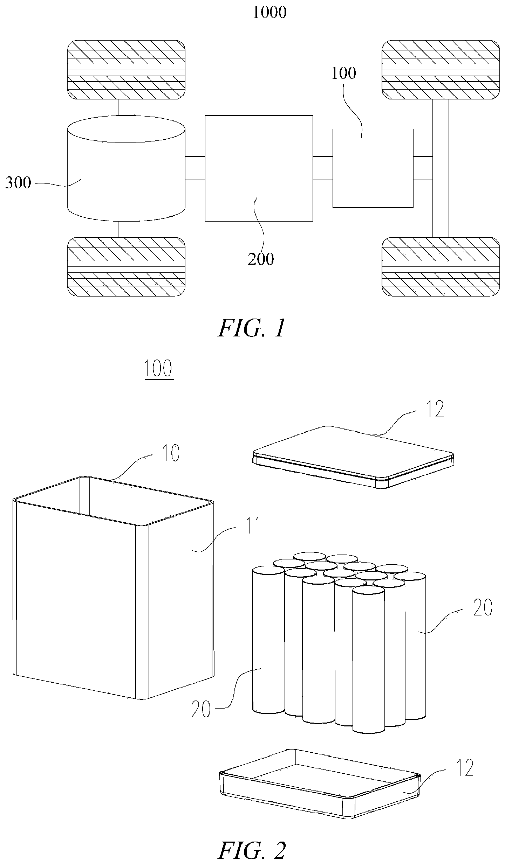

Referring to Fig. 1, Fig. 1 is a schematic structural diagram of a vehicle 1000 according to some embodiments of the present application. The vehicle 1000 may be a fuel vehicle, a gas vehicle, or a new energy vehicle. The new energy vehicle may be a battery electric vehicle, a hybrid electric vehicle, an extended-range vehicle, etc. A battery 100 is provided inside the vehicle 1000, and the battery 100 may be provided at the bottom, the front or the back of the vehicle 1000. The battery 100 may be configured to supply power to the vehicle 1000. For example, the battery 100 may be used as a power supply for operating the vehicle 1000. The vehicle 1000 may further include a controller 200 and a motor 300. The controller 200 is configured to control the battery 100 to supply power to the motor 300, for example, to meet working power requirements during starting, navigation and traveling of the vehicle 1000.

In some embodiments of the present application, the battery 100 can not only serve as a power supply for operating the vehicle 1000, but also serve as a power supply for driving the vehicle 1000, instead of or partially instead of fuel or natural gas, to provide driving power to the vehicle 1000.

Referring to Fig. 2, Fig. 2 is an exploded view of the battery 100 according to some embodiments of the present application. The battery 100 includes a case 10 and a battery unit 20. The battery unit 20 is accommodated in the case 10. The case 10 is configured to provide an accommodation space for the battery unit 20, and the case 10 may have various structures. In some embodiments, the case 10 may include a first portion 11 and a second portion 12. The first portion 11 and the second portion 12 are fitted to each other in a covered manner, and the first portion 11 and the second portion 12 jointly define the accommodation space for accommodating the battery unit 20. The second portion 12 may be of a hollow structure with one end open, the first portion 11 may be of a plate-like structure, and the first portion 11 covers an open side of the second portion 12 such that the first portion 11 and the second portion 12 jointly define the accommodation space; and the first portion 11 and the second portion 12 may also be of a hollow structure with one side open, and an open side of the first portion 11 covers the open side of the second portion 12. Of course, the case 10 formed by the first portion 11 and the second portion 12 may be in various shapes, such as a cylinder, a cuboid, etc.

In the battery 100, a plurality of battery units 20 may be provided. The plurality of battery units 20 may be connected in series, in parallel, or in series and parallel. The parallel-series connection means that the plurality of battery units 20 are connected both in series and in parallel. The plurality of battery units 20 may be directly connected together in series, or in parallel, or in series-parallel, and then a whole body composed of the plurality of battery units 20 is accommodated in the case 10; of course, the battery 100 may also be in the form that a plurality of battery units 20 are firstly connected in series or in parallel or in series and parallel to form a battery module, and then a plurality of battery modules are connected in series or in parallel or in series and parallel to form a whole and are accommodated in the case 10. The battery 100 may further include other structures. For example, the battery 100 may further include a busbar component for achieving electric connection between the plurality of battery units 20.

Each battery unit 20 may be a secondary battery or a primary battery, and may also be a lithium-sulfur battery, a sodium-ion battery, or a magnesium-ion battery, but is not limited thereto. The battery unit 20 may be in the shape of a cylinder, a flat body, a cuboid, etc.

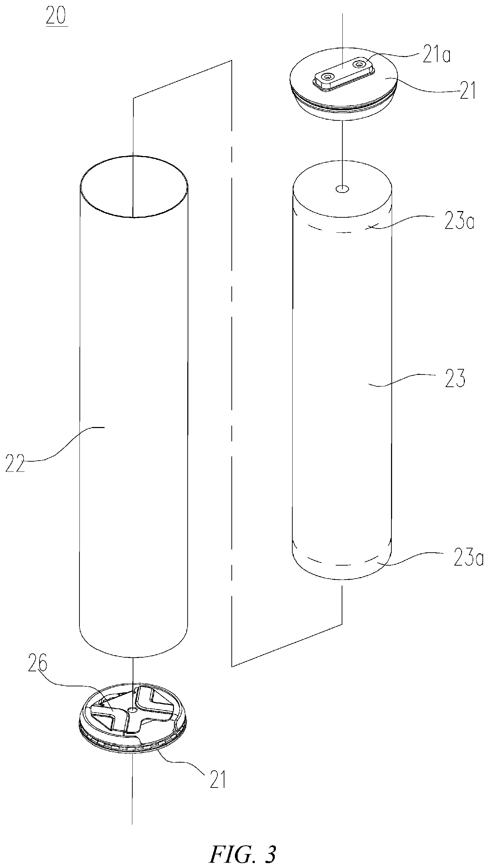

Referring to Fig. 3, Fig. 3 is a schematic exploded structural diagram of a battery unit 20 according to some embodiments of the present application. The battery unit 20 refers to the smallest unit of the battery. As shown in Fig. 3, the battery unit 20 includes an end cap 21, a housing 22, an electrode assembly 23 and other functional components.

The end cap 21 refers to a component that covers an opening of the housing 22 to isolate an internal environment of the battery unit 20 from an external environment. Without limitation, the end cap 21 may be shaped to adapt to the shape of the housing 22 so as to fit with the housing 22. Optionally, the end cap 21 may be made of a material (e.g., an aluminum alloy) with certain hardness and strength, and thus the end cap 21 is not easily deformed when being compressed or collided, so that the battery unit 20 can have higher structural strength, and the safety performance can also be improved. Functional components, such as an electrode terminal 21a, may be provided on the end cap 21. The electrode terminal 21a may be configured for electrical connection to the electrode assembly 23 for outputting or inputting electric energy of the battery unit 20. In some embodiments, a pressure relief mechanism, which is configured to release an internal pressure when the internal pressure or temperature of the battery unit 20 reaches a threshold, may be further provided on the end cap 21. The end cap 21 may also be made of various materials, such as copper, iron, aluminum, stainless steel, an aluminum alloy and plastic, which is not particularly limited in the embodiments of the present application. In some embodiments, an insulating member may be further provided on an inner side of the end cap 21. The insulating member may be used to isolate electrical connection components within the housing 22 from the end cap 21 so as to reduce the risk of short circuiting. Exemplarily, the insulating member may be made of plastic, rubber, etc.

The housing 22 is an assembly that is configured to fit with the end cap 21 so as to form the internal environment of the battery unit 20, wherein the formed internal environment may be used for accommodating the electrode assembly 23, an electrolytic solution and other components. The housing 22 and the end cap 21 may be separate components, and the housing 22 may be provided with an opening, at which the end cap 21 covers the opening to form the internal environment of the battery unit 20. Without limitation, the end cap 21 and the housing 22 may also be integrated. Specifically, the end cap 21 and the housing 22 may firstly form a common connecting surface before other components are placed into the housing, and then the end cap 21 covers the housing 22 when the interior of the housing 22 needs to be packaged. The housing 22 may be in various shapes and various sizes, for example, in the shape of a cuboid, a cylinder, a hexagonal prism, etc. Specifically, the shape of the housing 22 may be determined according to the specific shape and size of the electrode assembly 23. The housing 22 may be made of various materials, such as copper, iron, aluminum, stainless steel, an aluminum alloy, plastic, etc., which is not particularly limited in the embodiments of the present application.

The electrode assembly 23 is a component, where an electrochemical reaction occurs, in the battery unit 100. The housing 22 may include one or more electrode assemblies 23 therein. The electrode assembly 23 is mainly formed by winding or stacking a positive electrode plate and a negative electrode plate, and a separator (isolation film) is generally provided between the positive electrode plate and the negative electrode plate. The portions of the positive electrode plate and the negative electrode plate that each have an active material constitute a main body portion of the electrode assembly 23, and the portions of the positive electrode plate and the negative electrode plate that have no active material each constitute a tab 23a. A positive tab and a negative tab may be both located at one end of the main body portion or respectively at two ends of the main body portion. During the charge/discharge process of the battery, a positive electrode active material and a negative electrode active material react with the electrolytic solution, and the tabs 23a are connected to the electrode terminals to form a current loop.

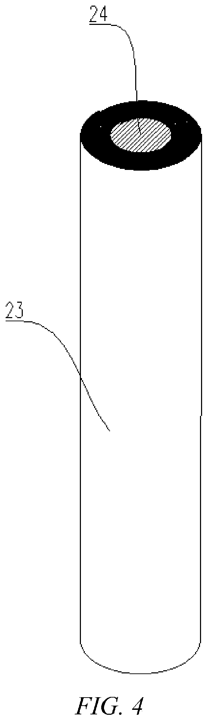

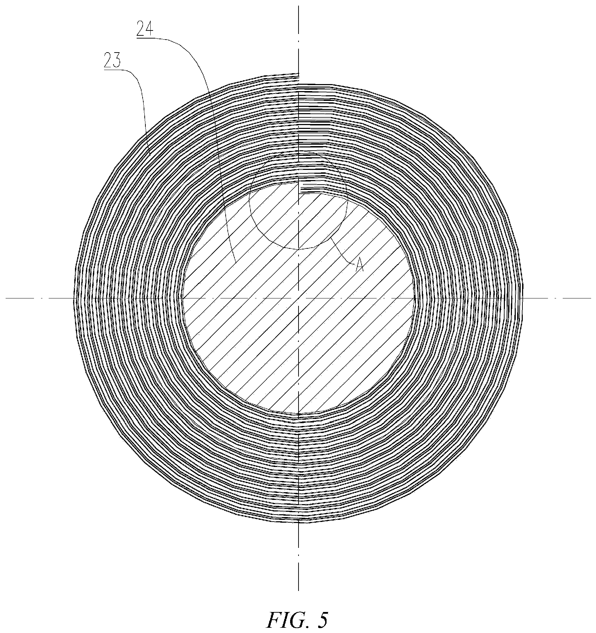

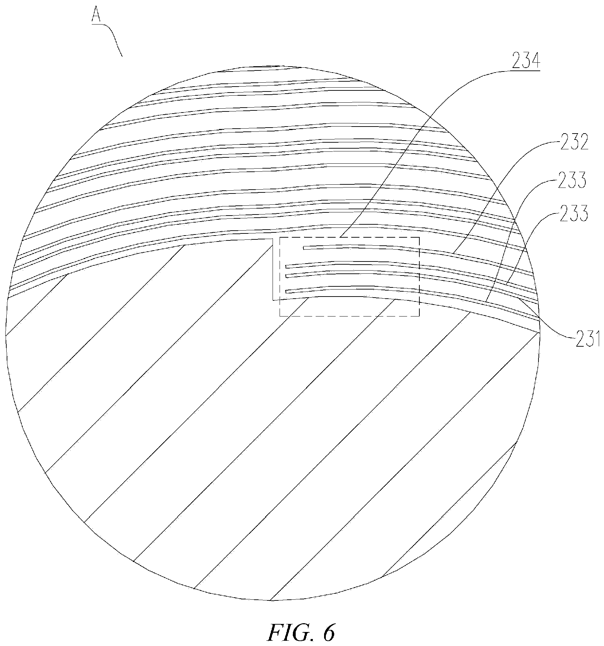

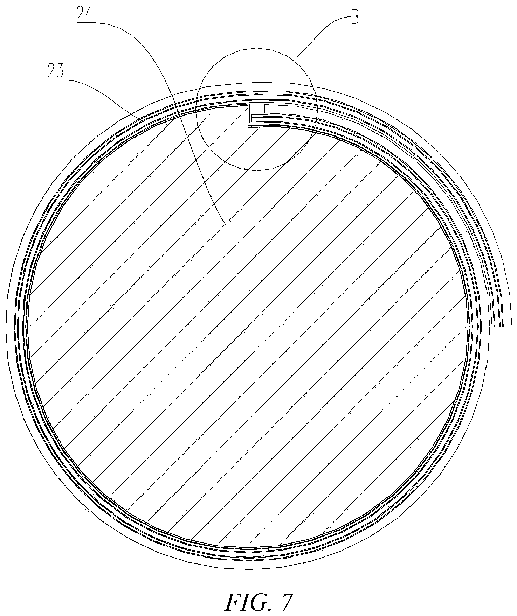

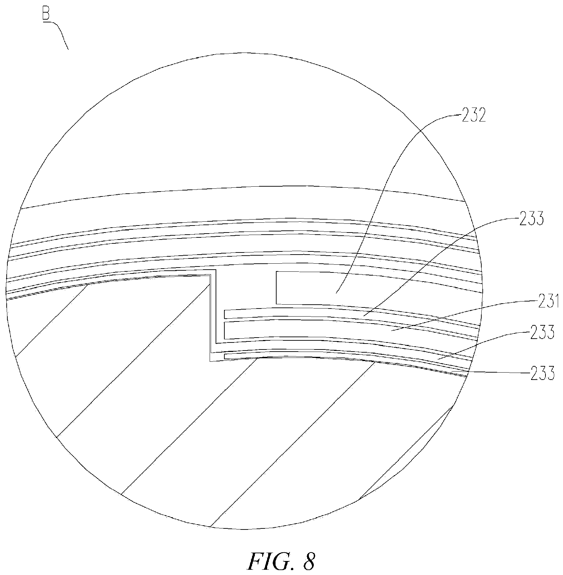

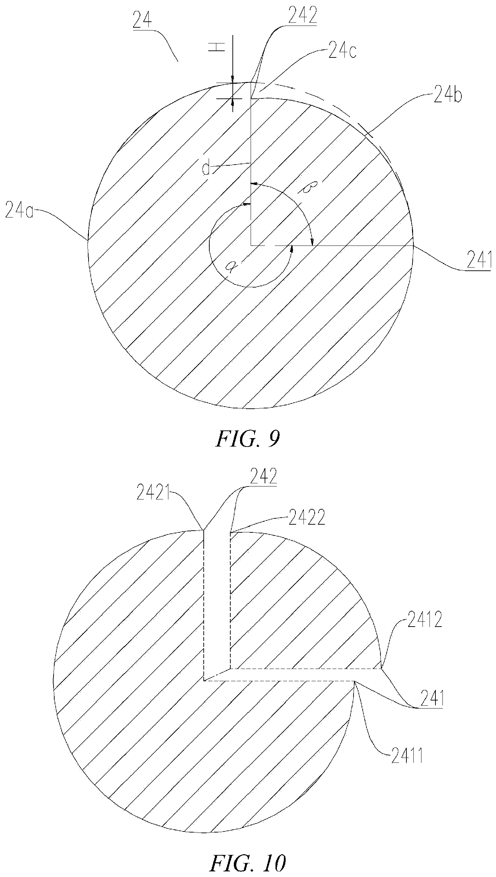

Referring to Figs. 4 to 9, Fig. 4 is a schematic structural diagram of the electrode assembly 23 according to some embodiments of the present application; Fig. 5 is a schematic cross-sectional structural diagram of the electrodes assembly 23 according to some embodiments of the present application; Fig. 6 is an enlarged schematic structural diagram of part A of the electrode assembly 23 shown in Fig. 5; Fig. 7 is a schematic cross-sectional structural diagram of the electrode assembly 23 according to other embodiments of the present application; Fig. 8 is an enlarged schematic structural diagram of part B of the electrode assembly shown in Fig. 7; Fig. 9 is a schematic cross-sectional structural diagram of a support component 24 according to some embodiments of the present application; and Fig. 10 is a schematic exploded cross-sectional diagram of the support component 24 shown in Fig. 9.

The battery unit 20 according to the present application includes: an electrode assembly 23, including a positive electrode plate 232 and a negative electrode plate 231 that have opposite polarities, and a separator 233 for separating the positive electrode plate 232 and the negative electrode plate 231; a support component 24, the electrode assembly 23 being wound around an outer periphery of the support component 24. An outer peripheral wall surface of the support component 24 includes a first circular arc surface 24a and a second circular arc surface 24b, one end 241 of the first circular arc surface 24a is connected to one end 241 of the second circular arc surface 24b, and the other end 242 of the first circular arc surface 24a is spaced apart from the other end 242 of the second circular arc surface 24b so as to form a step region 24c on the outer peripheral wall surface, the step region 24c being used for accommodating at least part of the electrode assembly 23.

The first circular arc surface 24a and the second circular arc surface 24b mentioned in the present application should be understood as a surface whose cross-sectional shape is configured as a circular arc, and the circular arc may be an equal-diameter circular arc or a variable-diameter circular arc. The variable-diameter circular arc mentioned in the present application should be understood as an arc with a gradually varied radius. After one end 241 of the first circular arc surface 24a is connected to one end 241 of the second circular arc surface 24b in the present application, the portion of the connection should be a complete circular arc surface. It can be understood that, the spaced arrangement of the other end 242 of the first circular arc surface 24a and the other end of the second circular arc surface 24b mentioned in the present application means that the other end 242 of the first circular arc surface 24a and the other end 242 of the second circular arc surface 24b are connected in a high-low misplaced manner, and a recess formed by the misplacement is a step region 24c. The step region 24c mentioned in the present application is formed by the second circular arc surface 24b. It should be understood that the step region 24c mentioned in the present application extends in an axial direction of the support component 24 and throughout the entire support component 24. The step region 24c accommodating at least part of the electrode assembly 23 in the present application may refer to that: in the electrode assembly 23 of some embodiments as shown in Figs. 5 and 6, the step region 24c is used for accommodating a winding starting end of the electrode assembly 23 composed of the separator 233, the positive electrode plate 232 and the negative electrode plate 231; or in the electrode assembly 23 of other embodiments as shown in Figs. 7 and 8, the winding starting end of one separator 233 is located in the step region 24c and is wound around the support component 24 for at least one turn, and a winding starting end of the positive electrode plate 232, a winding starting end of the other separator 233 and a winding starting end of the negative electrode plate 231 are then accommodated in the step region 24c again to be wound around the support component 24.

In the battery unit 20 of the present application, when the electrode assembly 23 is wound along an outer peripheral wall of the support component 24, the electrode assembly 23 may be placed in the step region 24c on the support component 24 for winding, and the step region 24c is configured such that the recess can accommodate the electrode assembly 23. With such an arrangement, the step region 24c formed on the outer peripheral wall surface of the support component 24 accommodates part of the electrode assembly 23, and can effectively reduce compression of the support component 24 against the winding starting end of the electrode assembly 23, thereby reducing the risk of stress concentration between the support component 24 and the electrode assembly 23. In this way, it is possible to effectively reduce, when the battery unit 20 expands during use, the occurrence of the problem of falling off of an active material on the electrode plates (the positive electrode plate 232 and the negative electrode plate 231) due to the compression, thereby reducing deterioration of the performance of the battery unit 20, effectively prolonging the service life of the battery unit 20, and improving the safety of the battery unit.

Referring to Figs. 6, 8, and 9, in some embodiments, the other end 242 of the first circular arc surface 24a and the other end 242 of the second circular arc surface 24b are spaced apart in a radial direction d of the support component 24 to form the step region 24c.

In the present application, the other end 242 of the first circular arc surface 24a and the other end 242 of the second circular arc surface 24b are spaced apart in the radial direction d of the support component 24, so that a connecting surface for the other end 242 of the first circular arc surface 24a and the other end 242 of the second circular arc surface 24b is a radial surface, and the radial surface generally refers to a surface perpendicular to a tangential direction at the radius, and this arrangement facilitates the machining of the step region 24c.

Referring to Fig. 9, in some embodiments, a central angle β corresponding to the second circular arc surface 24b may be in a range of 10° to 180°. The central angle β mentioned in the present application should be understood as an included angle formed by the radii at two ends of the circular arc surface. The sum of the central angle β of the second circular arc surface 24b and a central angle α of the first circular arc surface 24a should be 360°.

In the present application, it can be understood that the smaller the central angle β of the second circular arc surface 24b is, the shorter the arc length of the second circular arc surface 24b is, and a displacement is more likely to occur when the electrode assembly 23 is wound around the second circular arc surface 24b in a fitting manner, so that the winding starting end of the electrode assembly 23 cannot be better accommodated in the step region 24c. In the present application, setting the central angle β of the second circular arc surface 24b in the range of 10° to 180° can be more suitable for the winding of the electrode assembly 23, and meanwhile, it can be more conducive to accommodating the winding starting end in the step region 24c.

Referring to Figs. 9 to 11, in some embodiments, the first circular arc surface 24a may be configured as an equal-diameter circular arc surface, and the second circular arc surface 24b may be configured as a variable-diameter circular arc surface; the first circular arc surface 24a includes a first end portion 2411 and a second end portion 2421 (as shown in Fig. 10), the second circular arc surface 24b includes a third end portion 2412 and a fourth end portion 2422, the first end portion 2411 and the third end portion 2412 are connected, and the second end portion 2421 and the fourth end portion 2422 are spaced apart. The first end portion 2411 and the third end portion 2412 have an equal diameter, and the diameter of the fourth end portion 2422 is smaller than the diameter of the second end portion 2421.

The variable-diameter circular arc surface mentioned in the present application should be understood as that the radius gradually changes from the third end portion 2412 to the fourth end portion 2422, typically a cross-sectional line of the variable-diameter circular arc surface approximates a spiral line. In the present application, by configuring the second circular arc surface 24b on the outer peripheral wall of the support component 24 as the variable-diameter circular arc surface, a variable-diameter parameter of the variable-diameter circular arc surface can be flexibly set in combination with the specific structural condition of the electrode assembly 23, so that the step region 24c can be adapted to the winding of the electrode assembly under different conditions, and a structural design of the step region 24c can be more flexible and diverse.

In other embodiments, the second circular arc surface 24b may be configured as an elliptical surface. The elliptical surface mentioned in the present application may refer to a partially elliptical surface, such as an elliptical surface having a central angle β ranging from 10° to 180°. With the arrangement, by configuring the second circular arc surface 24b as the elliptical surface in the embodiment, the second circular arc surface 24b can have a larger central angle β, and thus can have a larger range of the step region 24c. In this way, more electrode assemblies 23 can be accommodated by means of the larger range of the step region 24c to further reduce the risk that the support component 24 and the electrode assembly 23 generate stress concentration.

In some other embodiments, the first circular arc surface 24a and the second circular arc surface 24b may be configured as equal-diameter circular arc surfaces, and the diameter of the first circular arc surface 24a is greater than the diameter of the second circular arc surface 24b.

The equal-diameter circular arc surfaces mentioned in the present application mean that the radii of the circular arc surfaces are equal. The diameter difference between the first circular arc surface 24a and the second circular arc surface 24b in the present application may be understood as that the outer peripheral wall surface of the support component 24 is formed by connecting circular arc surfaces having different radius sizes. In order to satisfy the condition that the connecting surface for the second end portion 2421 and the fourth end portion 2422 is a radial surface, after the first circular arc surface 24a and the second circular arc surface 24b of the equal-diameter circular arc surface of the outer peripheral wall surface of the support component 24 in the embodiment are connected, the central angle β of the second circular arc surface 24b is generally 180°. With the arrangement, the step region 24c may be formed in a variety of ways, and the structural design may be flexible and diverse.

Referring to Fig. 9, in some embodiments, the two separators 233, the positive electrode plate 232 and the negative electrode plate 231 have a thickness E, and the step region 24c has a depth H, wherein 0.8 ≤ H/E ≤ 1.2.

The thickness mentioned in the present application refers to the sum of the thickness of the two separators 233, the thickness of the positive electrode plate 232 and the thickness of the negative electrode plate 231. The depth H mentioned in the present application refers to a distance between the second end portion 2421 of the first circular arc surface 24a and the fourth end portion 2422 of the second circular arc surface 24b. With the arrangement, it is possible to better accommodate the winding starting end of the electrode assembly 23 by setting the depth of the step region 24c to be 0.8 to 1.2 times of the thickness of the two separators 233, the positive electrode plate 232 and the negative electrode plate 231 while the requirement for machining errors is met. Further, by setting H/E to be 1.2 times thereof, it is also possible to fully accommodate the winding starting end of the electrode assembly 23, thereby eliminating the risk that the support component 24 and the electrode assembly 23 generate stress concentration while the machining difficulty is reduced.

Referring to Fig. 6, in some embodiments, the separator 233, the positive electrode plate 232, the separator 233 and the negative electrode plate 231 are sequentially stacked and wound to form the electrode assembly 23, and the winding starting ends of the two separators 233, the winding starting end of the positive electrode plate 232 and the winding starting end of the negative electrode plate 231 are located in the step region 24c.

The winding starting ends of the two separators 233, the winding starting end of the positive electrode plate 232 and the winding starting end of the negative electrode plate 231 mentioned in the present application may be understood as the winding starting end 234 of the electrode assembly 23 described above (as shown in Fig. 6). In the present application, when the electrode assembly 23 is wound along the outer peripheral wall of the support component 24, the winding starting end 234 is placed in the step region 24c on the support component 24, and the recess formed by the step region 24c can accommodate part of the winding starting end 234. However, in general, a step formed by the winding starting end 234 is an important reason for the support component 24 to generate stress concentration in the prior art. In the present application, by accommodating the winding starting end 234 in the step region 24c, it is possible not only to effectively reduce the risk that the support component 24 and part of the winding starting end 234 generate stress concentration, but also to narrow the range of the step region 24, that is, the central angle β of the second circular arc surface 24b can be decreased, so that the overall structural strength of the support component 24 can be improved.

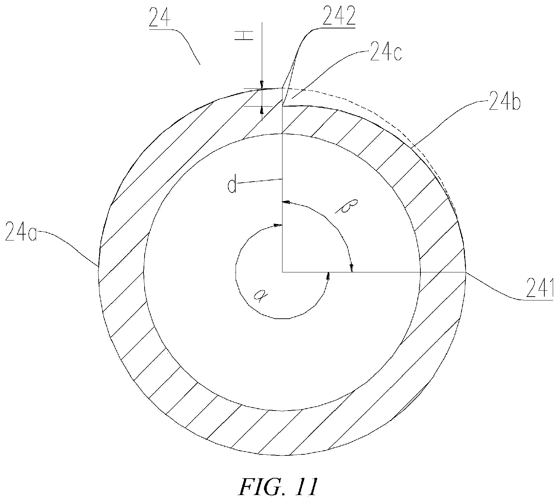

In some embodiments, the support component 24 may be configured as a solid structure so as to increase its overall structural strength. Referring to Fig. 11, in other embodiments, the support component 24 may also be configured as a hollow structure so as to decrease the weight of the support component 24. The height of the support component 24 in the present application is equal to the height of the electrode assembly 23.

In some embodiments, the wall thickness of the support component 24 may range from 0.1 mm to 100 mm. The material of the support component 24 may be stainless steel so as to further improve its overall structural strength. The outer peripheral wall surface of the support component 24 may be provided with an insulating layer, and the material of the insulating layer may be polytetrafluoroethylene or asphalt, so that the support component 24 has an insulating property. In other embodiments, the material of the support component 24 may also be polytetrafluoroethylene.

Referring to Fig. 2, Fig. 2 is an exploded view of the battery 100 according to some embodiments of the present application. The battery 100 includes: a battery unit 20 of any one of the embodiments described above.

Referring to Fig. 1, Fig. 1 is a schematic structural diagram of a vehicle 1000 according to some embodiments of the present application. The present application provides a power consuming device, such as the vehicle 1000 as described above. The power consuming device includes the battery 100 described above, the battery 100 being used for supplying electric energy.

While the present application has been described with reference to the preferred embodiments, various modifications can be made, and equivalents can be provided to substitute for the components thereof without departing from the scope of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A battery unit, comprising:
an electrode assembly comprising a positive electrode plate and a negative electrode plate that have opposite polarities, and a separator for separating the positive electrode plate and the negative electrode plate; and
a support component, the electrode assembly being wound around an outer periphery of the support component;
wherein an outer peripheral wall surface of the support component comprises a first circular arc surface and a second circular arc surface, one end of the first circular arc surface is connected to one end of the second circular arc surface, and the other end of the first circular arc surface is spaced apart from the other end of the second circular arc surface so as to form a step region on the outer peripheral wall surface, the step region being used for accommodating at least part of the electrode assembly.

2. The battery unit of claim 1, wherein the other end of the first circular arc surface is spaced apart from the other end of the second circular arc surface in a radial direction of the support component to form the step region.

3. The battery unit of claim 1 or 2, wherein a central angle corresponding to the second circular arc surface is in a range of 10° to 180°.

4. The battery unit of claim 1 or 2, wherein the first circular arc surface is configured as an equal-diameter circular arc surface, the second circular arc surface is configured as a variable-diameter circular arc surface, the first circular arc surface comprises a first end portion and a second end portion, the second circular arc surface comprises a third end portion and a fourth end portion, the first end portion and the third end portion are connected, and the second end portion and the fourth end portion are spaced apart, wherein the first end portion and the third end portion have an equal diameter, and the diameter of the fourth end portion is smaller than the diameter of the second end portion.

5. The battery unit of claim 4, wherein the second circular arc surface is configured as an elliptical surface.

6. The battery unit of claim 1 or 2, wherein the first circular arc surface and the second circular arc surface are configured as equal-diameter circular arc surfaces, and the diameter of the first circular arc surface is greater than the diameter of the second circular arc surface.

7. The battery unit of claim 1 or 2, wherein two separators, the positive electrode plate and the negative electrode plate have a thickness E, and the step region has a depth H, wherein 0.8 ≤ H/E ≤ 1.2.

8. The battery unit of claim 1 or 2, wherein the separator, the positive electrode plate, the separator and the negative electrode plate are sequentially stacked and wound to form the electrode assembly, and winding starting ends of the two separators, a winding starting end of the positive electrode plate and a winding starting end of the negative electrode plate are located in the step region.

9. A battery, comprising: a battery unit of any one of claims 1 to 8.

10. A power consuming device, comprising a battery unit of any one of claims 1 to 8.
